# EUROPEAN PATENT SPECIFICATION

(11) **EP 2 448 191 B1**
(45) Date of publication and mention of the grant of the patent: **21.03.2018**
(21) Application number: 10791272.7
(22) Date of filing: 26.04.2010
(51) Int. Cl.: H04L 12/721

(54) **METHOD AND APPARATUS FOR GENERATING CONSTRAINT ROUTE**
VERFAHREN UND VORRICHTUNG ZUR ERZEUGUNG MEHRERER BESCHRÄNKUNGSWEGE
PROCÉDÉ ET APPAREIL DE GÉNÉRATION DE ROUTE SOUS CONTRAINTE

(30) Priority: 25.06.2009 CN 200910148673
(43) Date of publication of application: 02.05.2012
(73) Proprietor: ZTE Corporation, Shenzhen, Guangdong 518057 (CN)
(72) Inventor: WANG, Zhihong, Shenzhen Guangdong 518057 (CN); WANG, Dajiang, Shenzhen Guangdong 518057 (CN)
(74) Representative: Murgitroyd & Company
(86) International application number: PCT/CN2010/072202
(87) International publication number: WO 2010/148766

(56) References cited:
- CN-A- 1 968 122
- CN-A- 101 616 085
- CN-A- 101 640 817
- US-A1- 2005 088 978
- ZIANG ZHANG ET AL: "Multi-constraint-pruning: an algorithm for finding K shortest paths subject to multiple constraints", 2008 14TH ASIA-PACIFIC CONFERENCE ON COMMUNICATIONS : (APCC) ; AKIHABARA, TOKYO, JAPAN, 14 - 16 OCTOBER 2008, IEEE, PISCATAWAY, NJ, USA, 14 October 2008 (2008-10-14), pages 1-5, XP031418030, ISBN: 978-4-88552-232-1
- VAN DER ZIJPP N J ET AL: "Path enumeration by finding the constrained K-shortest paths", TRANSPORTATION RESEARCH PART B. METHODOLOGICAL, OXFORD, GB, vol. 39, no. 6, 1 July 2005 (2005-07-01), pages 545-563, XP027775853, ISSN: 0191-2615 [retrieved on 2005-07-01]
- BAO XUECAI ET AL.: 'A Multi-Constraint Quality of Service Routing Algorithm.' JOURNAL OF IANGXIBLUE SKY UNIVERSITY vol. 3, no. 3, September 2008, XP008148957
- Eric Bouillet ET AL: "Path Routing in Mesh Optical Networks - chapter 6.7 General Constraint Routing Framework, p. 135" In: "Path Routing in Mesh Optical Networks - chapter 6.7 General Constraint Routing Framework, p. 135", 30 October 2007 (2007-10-30), John Wiley & Sons, Inc, XP055337095, ISBN: 978-0-470-01565-0 pages 135-135, * page 135 *

## Description

### Technical Field

The present invention relates to a method for computing a constraint based routing in the fields such as communication, and traffic and so on, and in particular, to a method and an apparatus for generating a constraint based routing.

### Background Art

Routing computation generally needs to satisfy various constraint conditions, and in the related art, the constraint conditions mainly include: passing a certain node; passing a certain link; avoiding a certain node; avoiding a certain link; separating shared risk link groups; separating from the designated link (the above constraint conditions support the strict constraint and the loose constraint, wherein the strict constraint means that other nodes are not allowed to exist between the previous node and a designated passing resource, while the loose constraint means that other nodes are allowed to exist between the previous node and a designated passing resource); the total hop limit; hop first; link cost first, and no constraint, etc..

Conventional passing-type constraint is processed in a manner of segmentation. For example, for a constraint condition that is required to pass a designated node or link, firstly the routing from the head node to the designated resource is computed, and then the routing from the designated resource to the tail node is computed, and the above two routings are connected end to end to obtain the final result. However, such a method has a very low processing efficiency, and meanwhile cannot ensure the correctness of the routing computation result in some cases, and the condition that the routing cannot be found or the routing that has been found is not the optimal routing may occur. The book "Path Routing in Mesh Optical Networks", section 6.7 "General Constraint Routing Framework", p. 135, ISBN 978-0-470-01565-0, 30 Oct 2007, shows a generic constrained routing framework using a K shortest path algorithm and iterating on a first set of primary paths until the first primary path is found with a feasible fully diverse backup path.

### Summary of the Invention

The technical problem to be solved in the present invention is to provide a method and an apparatus for generating a constraint based routing, which can ensure the correctness of the routing computation result.

In order to solve the above problem, the present invention provides a method for generating a constraint based routing, which comprises:
when computing a routing with a constraint condition, directly computing paths from a head node to a tail node of the routing, and comparing the paths that are computed with the constraint conditions of the routing, and adding one or more paths which satisfy the constraint condition of the routing to a result set of routing computation;
after said step of directly computing paths from the head node to the tail node of the routing, in the comparing step, once a path is computed, the path is compared with the constraint conditions of the routing starting from the optimal path,
if the constraint condition is satisfied, the path is added to the result set in the adding step until an upper limit of a capacity of the result set is reached.

Said step of directly computing paths from the head node to the tail node of the routing comprises: computing the paths one by one in a sequence of decreasing priorities starting from an optimal path according to priorities of the paths.

In said step of directly computing paths from the head node to the tail node of the routing, a K shortest path algorithm is adopted.

In order to solve the above problem, the present invention further provides an apparatus for generating a constraint based routing, which comprises a path computation module, a comparison module and a storage module;
the path computation module is configured to: directly compute paths from a head node to a tail node of a routing, and send the paths that are computed to the comparison module;
the comparison module is configured to: compare the paths computed by the routing computation module with a constraint condition of the routing, and store the paths which satisfy the constraint conditions to the storage module;
the storage module is configured to: store results of routing computation until an upper limit of a capacity of the paths is reached.

The routing computation module is configured to: compute the paths one by one in a sequence of decreasing priorities starting from an optimal path according to priorities of the paths when directly computing the paths from the head node to the tail node of the routing.

The routing computation module is configured to: adopt a K shortest path algorithm when directly computing the paths from the head node to the tail node of the routing.

The routing computation module is configured to: once a path is computed starting from the optimal path, send to the path to the comparison module for comparison.

With the present invention, when a routing query request with constraint conditions is processed, phenomena of omission or error can be avoided, i.e., the path is bound to be found as long as there is a path satisfying conditions, and meanwhile the efficiency of routing computation is increased. In an example, routings can also be computed based on priorities by using the K Shortest Path (KSP) algorithm to find one optimal result or N results sequenced according to priorities.

### Brief Description of Drawings

FIG. 1 is a topological graph according to an example of the present invention;
FIG. 2 is a flow chart of processing according to an example of the present invention;
FIG. 3 is a diagram of the apparatus for generating a constraint based routing according to an example of the present invention.

### Preferred Embodiments of the Invention

The present invention is defined in the independent claims. The dependent claims define particular embodiments of the present invention.
Specific examples of the present invention will be described below. A method for computing a routing with constraint conditions based on a K shortest path (KSP) algorithm is provided in the examples of the present invention.

The KSP algorithm is a method for computing a routing that can provide a result of multiple paths sequenced based on priorities, and this method can be used to provide a list of k alternate routings, wherein various paths are sequenced based on priorities.

The constraint conditions for computing a routing are one or more of the following conditions:
passing a certain node; passing a certain link; avoiding a certain node; avoiding a certain link; separating shared risk link groups; separating from a designated link (the above constraint conditions support the strict constraint and the loose constraint, wherein the strict constraint means that other nodes are not allowed to exist between the previous node and a designated passing resource, while the loose constraint means that other nodes are allowed to exist between the previous node and a designated passing resource); the total hop limit; hop first; link cost first, and no constraint, etc..

The example of the present invention comprises the following steps:
computing paths from a head node to a tail node of the routing one by one using a KSP algorithm, and obtaining the optimal path, the secondary optimal path, the third optimal path, ..., until the k^{th} optimal path in sequence;
once a path has been computed, comparing the constraint conditions of the routing with the path, and if it is judged that this path satisfies the constraint conditions of the routing, storing the path into a result set of routing computation, otherwise, discarding the path;
repeating the above two steps until all the paths satisfying the constraint conditions are computed or the number of paths in the result set reaches a set upper limit of the capacity of the result set.

It would be easily appreciated that the path may be compared with the constraint conditions of the routing after all paths from the head node to the tail node of the routing are computed, and the paths satisfying the constraint conditions are then stored into the result set of routing computation in other examples. Besides, the algorithm in the above example may obtain the computation result without having to compute all paths, which has a relatively high efficiency. In addition, the method for computing a routing is not limited to the KSP algorithm, and the problem that the path cannot be computed even though there are paths satisfying the constraint conditions due to the existing segmentation computation method can be avoided as long as a path from the head node to the tail node is computed and then is compared with the constraint conditions of the routing directly.

Specific application examples of the present invention will be described below with reference to the accompanying drawings, wherein the constraint condition of the passing node is taken as an example, and it is supposed that only one node is passed.

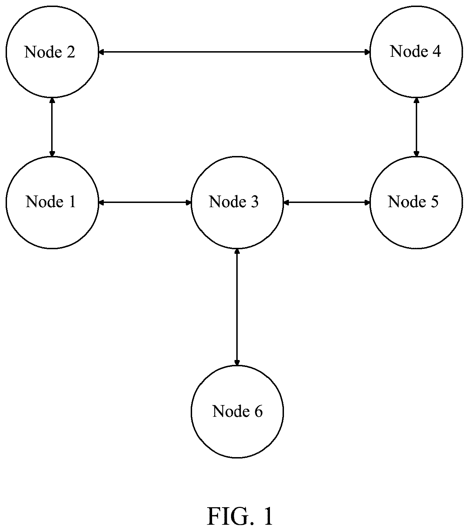

As shown in FIG. 1, in the computation, node 1 is a head node, node 6 is a tail node, node 5 is a passing node, and the constraint attribute is loose.

If a conventional routing computation method is used, firstly, the routing from the head node to the passing node is computed, and then the routing from the passing node to the tail node is computed, and lastly the two segments of routings are connected together to form the final routing result. By taking FIG. 1 as an example, firstly the optimal path from node 1 to node 5 is computed to obtain a result of nodes 1, 3, 5; then the optimal path from node 5 to node 6 is computed, and the computation result is null. Since there is no path between node 5 and node 6 with avoidance of node 3, the final routing computation fails.

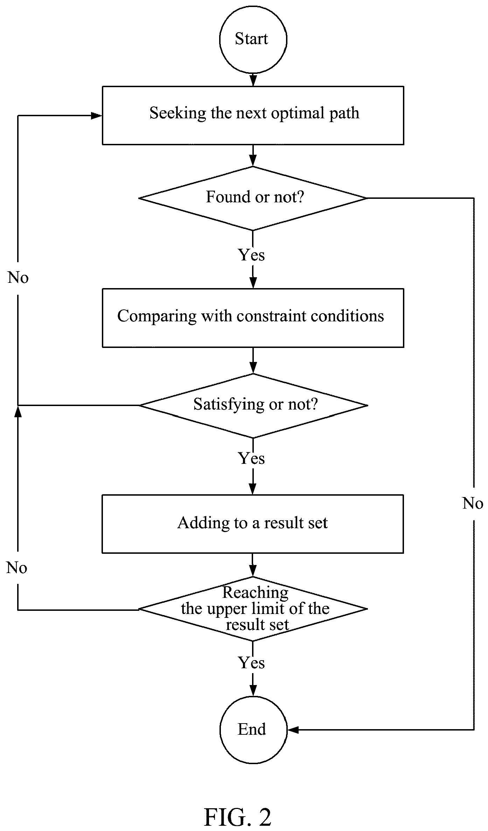

However, correct computation results can be obtained using the method adopted in the present invention. As shown in FIG. 2, the specific steps are as follows:
firstly, an optimal path from node 1 to node 6 is computed using the KSP algorithm, obtaining a path of nodes 1, 3, 6;
then the computation result obtained in the above step is compared with the constraint condition which requires passing node 5, and the path of nodes 1, 3, 6 does not satisfy the condition and thus is discarded;
afterwards the next optimal path is sought, i.e., a secondary optimal path from node 1 to node 6 is computed, and a path of nodes 1, 2, 4, 5, 3, 6 is obtained;
the secondary optimal path is compared with the constraint condition, the secondary optimal path of nodes 1, 2, 4, 5, 3, 6 passes node 5 and thus satisfies the constraint condition, and the computation result is added to a result set;
if the upper limit of the result set is not reached, the above steps are repeated until all paths are computed; in this example, the third optimal path from node 1 to node 6 is computed, a result of null is obtained, and then the computation ends, a final result of nodes 1, 2, 4, 5, 3, 6 is obtained, and the routing computation succeeds.

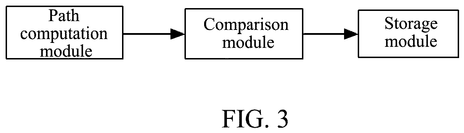

Correspondingly, the present example provides an apparatus for generating a constraint based routing, and the apparatus comprises a path computation module, a comparison module and a storage module, as shown in FIG. 3.

The path computation module is used to compute paths from a head node to a tail node of the routing. In this example, the paths are computed one by one starting from the optimal path using a KSP algorithm, and once a path is computed, it is sent to the comparison module for comparison. However, in other examples, all paths may be computed at one time and are then collectively sent to the comparison module for comparison.

The comparison module is used to compare the results computed by the routing computation module with constraint conditions of the routing, and store the routings which satisfy the constraint conditions to the storage module;
the storage module is used to store the results of routing computation.

This apparatus may be a Path Computation Entity (PCE), whose related service flow may be as follows: a PCE performs computation after receiving a routing computation request with constraint conditions initiated by a Path Computation Client (PCC), and returns results to the PCC.

Although the above examples are used to describe the present invention, they are not intended to limit the present invention, and for those skilled in the art, the present invention may have various modifications and variations. Any modification, equivalent substitution and improvement made within the principle of the present invention shall fall into the protection scope of the present invention.

### Industrial Applicability

With the present invention, when a routing query request with constraint conditions is processed, phenomena of omission or error can be avoided, i.e., the path is bound to be found as long as there is a path satisfying conditions, and meanwhile the efficiency of routing computation is increased. In an example, routings can also be computed based on priorities by using the K Shortest Path (KSP) algorithm to find one optimal result or N results sequenced according to priorities.

## Claims

1. A method for generating a constraint based routing comprising:
when computing a routing with a constraint condition, directly computing paths from a head node to a tail node of the routing;
once a path is computed, comparing the computed path with a constraint condition;
if the constraint condition is satisfied, the path is added to the result set until an upper limit of a capacity of the result set is reached.

2. The method according to claim 1, wherein said step of directly computing paths from the head node to the tail node of the routing comprises: computing the paths one by one in a sequence of decreasing priorities starting from an optimal path according to priorities of the paths.

3. The method according to claim 2, wherein in said step of directly computing paths from the head node to the tail node of the routing, a K shortest path algorithm is adopted.

4. An apparatus for generating a constraint based routing comprising a path computation module, a comparison module and a storage module;
the path computation module is configured to: directly compute paths from a head node to a tail node of a routing, and once a path is computed, send the computed path to the comparison module;
the comparison module is configured to: compare the computed path from the path computation module with a constraint condition, and if the path satisfies the constraint condition, then store the path to the storage module; the storage module is configured to: store results of routing computation until an upper limit of a capacity of the paths is reached.

5. The apparatus according to claim 4, wherein
the routing computation module is configured to: compute the paths one by one in a sequence of decreasing priorities starting from an optimal path according to priorities of the paths when directly computing the paths from the head node to the tail node of the routing.

6. The apparatus according to claim 5, wherein
the routing computation module is configured to: adopt a K shortest path algorithm when directly computing the paths from the head node to the tail node of the routing.

7. The apparatus according to claim 4, 5 or 6, wherein
the routing computation module is configured to: once a path is computed starting from the optimal path, send the path to the comparison module for comparison.

## Patentansprüche

1. Ein Verfahren zum Erzeugen einer beschränkungsbasierten Leitweglenkung, beinhaltend:
beim Berechnen einer Leitweglenkung mit einer Beschränkungsbedingung, direktes Berechnen von Wegen von einem Kopfknoten zu einem Endknoten der Leitweglenkung;
nachdem ein Weg berechnet wurde, Vergleichen des berechneten Wegs mit einer Beschränkungsbedingung;
wenn die Beschränkungsbedingung erfüllt ist, wird der Weg zu dem Ergebnissatz hinzugefügt, bis eine Obergrenze einer Kapazität des Ergebnissatzes erreicht ist.

2. Verfahren gemäß Anspruch 1, wobei der Schritt des direkten Berechnens von Wegen von dem Kopfknoten zu dem Endknoten der Leitweglenkung Folgendes beinhaltet: Berechnen der Wege, einem nach dem anderen, in einer Sequenz abnehmender Prioritäten ausgehend von einem optimalen Weg gemäß den Prioritäten der Wege.

3. Verfahren gemäß Anspruch 2, wobei in dem Schritt des direkten Berechnens von Wegen von dem Kopfknoten zu dem Endknoten der Leitweglenkung ein K-kürzeste-Wege-Algorithmus eingesetzt wird.

4. Eine Vorrichtung zum Erzeugen einer beschränkungsbasierten Leitweglenkung, beinhaltend ein Wegberechnungsmodul, ein Vergleichsmodul und ein Speicherungsmodul;
das Wegberechnungsmodul ist für Folgendes konfiguriert: direktes Berechnen von Wegen von einem Kopfknoten zu einem Endknoten einer Leitweglenkung, und nachdem ein Weg berechnet wurde, Senden des berechneten Wegs an das Vergleichsmodul;
das Vergleichsmodul ist für Folgendes konfiguriert: Vergleichen des berechneten Wegs von dem Wegberechnungsmodul mit einer Beschränkungsbedingung, und wenn der Weg die Beschränkungsbedingung erfüllt, dann Speichern des Wegs in dem Speicherungsmodul;
das Speicherungsmodul ist für Folgendes konfiguriert: Speichern von Ergebnissen der Leitweglenkungsberechnung, bis eine Obergrenze einer Kapazität der Wege erreicht ist.

5. Vorrichtung gemäß Anspruch 4, wobei
das Leitweglenkungsberechnungsmodul für Folgendes konfiguriert ist: Berechnen der Wege, einem nach dem anderen, in einer Sequenz abnehmender Prioritäten ausgehend von einem optimalen Weg gemäß den Prioritäten der Wege, beim direkten Berechnen der Wege von dem Kopfknoten zu dem Endknoten der Leitweglenkung.

6. Vorrichtung gemäß Anspruch 5, wobei
das Leitweglenkungsberechnungsmodul für Folgendes konfiguriert ist: Einsetzen eines K-kürzeste-Wege-Algorithmus beim direkten Berechnen der Wege von dem Kopfknoten zu dem Endknoten der Leitweglenkung.

7. Vorrichtung gemäß Anspruch 4, 5 oder 6, wobei
das Leitweglenkungsberechnungsmodul für Folgendes konfiguriert ist: nachdem ein Weg ausgehend vom optimalen Weg berechnet wurde, Senden des Wegs an das Vergleichsmodul zum Vergleich.

## Revendications

1. Un procédé pour générer un routage basé sur des contraintes comprenant :
lors du calcul d'un routage avec une condition de contrainte, le fait de calculer directement des chemins depuis un noeud de tête jusqu'à un noeud de queue du routage ;
une fois qu'un chemin est calculé, le fait de comparer le chemin calculé avec une condition de contrainte ;
si la condition de contrainte est remplie, le chemin est ajouté à l'ensemble de résultats jusqu'à ce qu'une limite supérieure d'une capacité de l'ensemble de résultats soit atteinte.

2. Le procédé selon la revendication 1, dans lequel ladite étape consistant à calculer directement des chemins depuis le noeud de tête jusqu'au noeud de queue du routage comprend : le fait de calculer les chemins un par un en une séquence de priorités décroissantes en commençant par un chemin optimal selon des priorités des chemins.

3. Le procédé selon la revendication 2, dans lequel dans ladite étape consistant à calculer directement des chemins depuis le noeud de tête jusqu'au noeud de queue du routage, un algorithme de K plus courts chemins est adopté.

4. Un appareil pour générer un routage basé sur des contraintes comprenant un module de calcul de chemins, un module de comparaison et un module de stockage ;
le module de calcul de chemins est configuré pour : calculer directement des chemins depuis un noeud de tête jusqu'à un noeud de queue d'un routage, et une fois qu'un chemin est calculé, envoyer le chemin calculé au module de comparaison ;
le module de comparaison est configuré pour : comparer le chemin calculé en provenance du module de calcul de chemins avec une condition de contrainte, et si le chemin remplit la condition de contrainte, stocker alors le chemin dans le module de stockage ;
le module de stockage est configuré pour : stocker des résultats de calcul de routage jusqu'à ce qu'une limite supérieure d'une capacité des chemins soit atteinte.

5. L'appareil selon la revendication 4, dans lequel
le module de calcul de routage est configuré pour : calculer les chemins un par un en une séquence de priorités décroissantes en commençant par un chemin optimal selon des priorités des chemins lors du calcul direct des chemins depuis le noeud de tête jusqu'au noeud de queue du routage.

6. L'appareil selon la revendication 5, dans lequel
le module de calcul de routage est configuré pour : adopter un algorithme de K plus courts chemins lors du calcul direct des chemins depuis le noeud de tête jusqu'au noeud de queue du routage.

7. L'appareil selon la revendication 4, la revendication 5 ou la revendication 6, dans lequel le module de calcul de routage est configuré pour : une fois qu'un chemin est calculé en commençant par le chemin optimal, envoyer le chemin au module de comparaison pour comparaison.
